# EUROPEAN PATENT APPLICATION

(11) **EP 1 407 670 A1**
(43) Date of publication of application: **14.04.2004**
(21) Application number: 03380221.6
(22) Date of filing: 07.10.2003
(51) Int. Cl.: A23B 4/28, A23L 1/318, A23B 4/26, A23L 1/314

(54) **Procedure and equipment for salting and curing ham**

(30) Priority: 08.10.2002 ES 200202298
(71) Applicant: Pepino, S.L., 37210 Vitigudino, Salamanca (ES)
(72) Inventor: Martin Vicente, José, 37210 Vitigudino Salamanca (ES); Martin Vicente, Sebastian, 37210 Vitigudino Salamanca (ES)
(74) Representative: Canadell Isern, Roberto, Patent Attorney

(57) **Abstract**

Procedure and equipment for salting and curing ham, consisting in the use of a stainless steel table, a stainless steel tank-machine, a pressure pump with liquid rotation, a hose ending in a pistol with needle and plastic containers with ice, through which the introduction of the brine inside the meat piece is made, specifically in the femoral-coccyx joint, in an amount of 50 ml. Rupture of the membrane due to excessive increase in the pressure is avoided until the blood accumulated in the joint and the synovial liquid are removed to the outside due to an increase in the applied pressure.

## Description

### PURPOSE

This descriptive report refers to a request for an invention patent corresponding to a procedure and equipment for salting and during ham, the purpose of which lies in achieving the reduction to values near 0 in relation to the loss the normal alteration suffered by the entrepreneurs of the sector during the process of salting and curing ham.

### SCOPE

This invention is to applied within the industry dedicated to the treatment of meat pieces, preferably with the industry dedicated to the treatment of ham, shoulders and cured meat.

### HISTORY

During the traditional process of salting-curing ham the brine used, normally composed of salt to which a percentage of nitrates and nitrites is added, slowly penetrates the meat piece from the periphery to the central part and, whilst this is happening, the ham or similar meat piece looses its initial humidity and is transformed into a micrologically-safe product.

The same importance is given to the fact of meticulously bleeding the meat piece before being placed in the salting chamber, especially when the blood may accumulate in the femoral artery.

The mentioned conventional and handicraft procedure is carried out manually and it is intended to cure all the treated meat pieces, especially ham, thus avoiding the almost certain deep alteration, that is decay, caused by the penetration and spreading of micro-organisms present in the retained blood.

However, a large percentage of the treated meat pieces, especially fresh ham meant for curing, have when fresh a deep alteration at the femoral-coccyx joint, which is not only difficult to detect but is irremediably results in product losses, returning of the goods and a decrease in the quality of the cured ham.

This alteration of the femoral-coccyx joint cannot be controlled by means of the traditional salting process.

In normal conditions, the femoral-coccyx joint, that is the joint formed by the head of the femur and the pit of the socket, is protected by the synovial capsule of the joint itself. The function of the synovial capsule, formed by the membrane of the capsule and the synovial fluid, is to avoid deterioration and breaking-up of the bones it protects, as the density of the synovial fluid facilitates their movement and rotation.

However, due to the present conditions of farming and handling, that is intensive farming where the pigs hardly move, excessively long transport and under anomalous conditions to the abattoirs, as well as the anesthetization of the pigs, causes these animals to stamp and make convulsive movements, which are substantially significant during the sacrifice and bleeding.

In a very high percentage of pigs, the above results in haemorrhage and subsequent accumulation of blood in the femoral-coccyx joint and this accumulation of blood together with the impermeability quality of the synovial membrane, which does not allow the brine to go inside the joint, are the causes of losses and subsequent deterioration.

The percentage of ham or meat pieces having blood in the femoral-coccyx joint varies between 30% and 80%, depending on the farming and handling conditions to which the animals are subjected.

It should be indicated that the deterioration caused by the presence of blood in the femoral-coccyx joint is only detected once the ham is cured, whether this be the sample slice or during slicing and/or handling after curing.

The following alterations are recorded for the total percentage of hams having blood in the femoral-coccyx joint, established between 30% and 80%:
- 6% of the hams will be classified as total sample slice and in these hams a deep decay is caused at the femoral-coccyx joint level, as the rupture of the synovial membrane during the curing process helps the decay to affect the whole ham. The above is detected during the sample slice phase as a very characteristic decaying odor is noticed and these hams, which completely lose their value, are sold for their ingestion together with other non-edible remains such as fat, skin, hair, bones, etc.
- 40% of these hams are classified as seriously damaged, these being meat pieces shaped as ham or similar, which although in the sample slice do not have a strange smell, when being consumed and reaching the femoral-coccyx joint area a darkening and blackening of the area is noticed. Without a doubt this has been caused by small fluid and blood retentions and, if during slicing, the consumer ruptures the synovial membrane the rotten odor concentrated in the previously leaktight joint is revealed. This situation results in many complaints and returns of the merchandise with the corresponding substantial loss of the merchandise sold.

Apart from all these alterations, the greater presence of parasites in the form of acarus, grasshoppers, etc. in the affected hams must be taken into account, as the decay at the femoral-coccyx joint level acts as a decoy for this type of insects. This influences the time and dedication that must be used during maintenance and repair of these meat pieces.

The evident solution to the existing problem at this time would be to be able to count on a procedure avoiding all the characteristics mentioned as negative as regards distribution and consumption of meat pieces, preferably ham.

However, the applicant has no knowledge of the existence at this time of an invention having determining characteristics that permit removing the described inconviences.

### DESCRIPTION OF THE INVENTION

The procedure and equipment for salting and curing ham, which the invention proposes, consists of using a stainless steel table, a tank-machine also made of stainless steel, a pressure pump with liquid rotation, a hose ending in a pistol provided with the needle of suitable length, as well as plastic containers with ice.

The stainless steel table is intended to be used for supporting and fastening the ham or similar meat piece during the brine injection process. The table in question must include drainage channels to avoid contact of the extracted fluid with the meat pieces and the drainage channels will run into an outlet connected in turn with a rigid tube to a leaktight tank, where the extracted liquid will be collected.

The tank-machine will be used to store the brine to injected into the meat piece. The pressure pump with liquid rotation will be used in such a way that injection of the brine is permitted at the desired pressure.

As regards the hose ending in a pistol provided with a needle of suitable length, this will have a number of suitable holes around the point of the needle to permit correct removal of the brine, whiles the plastic containers with ice will be used to maintain the brine at a constant temperature around 3°C and 5°C.

The brine to be used to avoid alterations in the femoral-coccyx joint will consist of water, salt, sugar, preservatives and authorized antirust components.

The procedure in question consists of directly injecting the brine into the femoral-coccyx joint and will be performed before placing the ham in the salting chamber, where a traditional'curing process will be continued.

Before performing the brine injection, it must be verified that the ham is perfectly refrigerated and that the internal temperature of the ham or similar will be established between 3°C and 5°C.

The perforated needle is introduced through the medium face of the ham and, passing through the different muscle fascia, is directed to the femoral-coccyx joint. Once the membrane has been crossed, the handler will notice a sudden change in the resistance, which is caused when the membrane is crossed, and an approximate volume of 50 ml of brine will be injected inside the joint. Rupture of the membrane due to excessive increase in the pressure on injecting the brine must be avoided.

Subsequently, the needle is slowly extracted, making sure that as much synovial liquid as accumulated blood in the joint are removed to the outside due to increasing the applied pressure only.

A small volume of injected brine will be retained inside the femoral-coccyx joint and this fact will improve the suitable curing of the ham, even avoiding the defects caused by small ruptures of the femoral bone during a traditional curing process.

### PREFERRED DESCRIPTION OF THE INVENTION

The recommended procedure and equipment for salting and curing ham consists of using a stainless steel table, a stainless steel tank-machine, a pressure pump with liquid rotation, a hose ending in a pistol provided with a needle of suitable length, as well as plastic containers with ice to maintain the brine at a constant temperature between 3°C and 5°C.

The brine is made of a mixture of water, salt, sugar, preservative and authorized antirust components.

The brine will have a concentration of 0.16% and an approximate amount of 50 ml will be injected in each meat piece, usually ham.

The brine will be prepared with cold drinking water and will be continuously maintained refrigerated with ice containers.

In synthesis, the invention consists in the direct injection of brine into the femoral-coccyx joint and this procedure will be performed before placing the ham in the salting chamber, where the traditional curing process will be continued.

Before beginning the brine injection it will be verified that the ham is perfectly refrigerated, and the internal temperature of the ham determined between 3° and 5°C.
The perforated needle is introduced through the medium face of the ham and, passing through the different muscle fascia, is directed to the femoral-coccyx joint. Once the membrane has been crossed an approximate volume of 50 ml of brine will be injected inside the joint. Rupture of the membrane due to excessive increase in the pressure on injecting the brine must be avoided. Subsequently, the needle is slowly extracted, making sure that as much synovial liquid as accumulated blood in the joint are removed to the outside due to increasing the applied pressure only.

The results obtained in cured ham or similar meat pieces show that the brine injection procedure into the femoral-coccyx joint and extraction of the synovial liquid and accumulat blod completely dries out the area, thus avoiding the above mentioned alterations in 100%.

At the same time, the appearance and attacks of "louse" and other insects is avoided, reducing their appearance in 70% of the ham or similar meat pieces as a result of the absence of the typical deep decay odor, thus avoiding the typical hollows result of the activities of the "louse" and other insects.

Likewise, 80% of the small factures of the femur are repaired and these fractures, located once the ham is boned in the case of performing a traditional salting, may cause alterations and local bad odors.

The ham cured by this salting procedure has a pink-clean aspect when boned, very pleasant for the sight and around the bone there are no strange odors, which, added to the visual aspect it has, favors its acceptance and final marketing.

## Claims

1. PROCEDURE FOR SALTING AND CURING HAM, **characterized by** the fact this is done with a brine injected into the meat piece up to the femoral-coccyx joint, each piece injected with some 50 ml. The brine is prepared with cold drinking water and maintained continuously refrigerated in containers with ice at a constant temperature between 3°C and 5°C.

2. PROCEDURE FOR SALTING AND CURING HAM, according to claim 1, **characterized by** the fact the brine for carrying out said procedure is composed of water, salt, sugar and preservatives, as well as authorized antirust components, with a concentration of 0.16%.

3. EQUIPMENT FOR SALTING AND CURING HAM, according to claim 1, **characterized by** the fact it consists of a stainless steel table, a stainless steel tank-machine, a pressure pump with liquid rotation, a hose ending in a pistol provided with a needle of suitable length, as well as plastic containers with ice. The stainless steel table is provided with drainage channels to avoid contact with the liquid extracted from the ham. The drainage channels run into an outlet connected, in turn, with a rigid tube to a leaktight tank where the extracted liquid is collected. The brine injected into the meat piece is incorporated in the stainless steel tank-machine.

4. EQUIPMENT FOR SALTING AND CURING HAM, according to claims 1 and 3, **characterized by** the fact that in order to carry out said procedure the pressure pump with liquid rotation is intended for the brine injection.

5. EQUIPMENT FOR SALTING AND CURING HAM, according to claims 1 and 3, **characterized by** the fact that in order to carry out said procedure the hose ending in a pistol has a suitable number of holes around the point of the needle to remove the brine.

6. EQUIPMENT FOR SALTING AND CURING HAM, according to claims 1, 3, 4 and 5, **characterized by** the fact the brine injection is made previous to the placing of the ham and similar in the salting chamber, crossing the different muscle fascia to the femoral-coccyx joint, and once the membrane in this area has been pierced, an approximate volume of 50 ml is injected inside the joint. The needle is slowly extracted making sure that as much synovial liquid as accumulated blood in the joint are removed to the outside due to increasing the applied pressure only.
